# FASCICULE DE BREVET EUROPEEN

(11) **EP 1 806 474 B1**
(45) Date de publication et mention de la délivrance du brevet: **31.08.2016**
(21) Numéro de dépôt: 07300707.2
(22) Date de dépôt: 08.01.2007
(51) Int. Cl.: E21D 11/10, E21D 11/14, E04C 5/06, F16L 1/038, F16L 55/162

(54) **Procédé de réparation du revêtement d'une galerie**
Verfahren zum Reparieren der Verkleidung einer Galerie
A methof of repairing the covering of a gallery

(30) Priorité: 06.01.2006 FR 0650058
(43) Date de publication de la demande: 11.07.2007
(73) Titulaire: SOCIETE CIVILE DE BREVETS MATIERE, 15000 Aurillac (FR)
(72) Inventeur: MATIERE, Marcel, 15000, AURILLAC (FR)
(74) Mandataire: Michelet, Alain

(56) Documents cités:
- DE-C- 3 335 041
- DE-C- 4 102 266
- FR-A- 2 849 145
- US-A- 775 927
- US-A- 3 251 167

## Description

L'invention a pour objet un procédé de réparation, en cas de fissuration, du revêtement de la face interne d'une galerie de circulation de fluide.

L'approvisionnement en eau potable des agglomérations a toujours été un problème important que l'on a résolu, dès l'Antiquité, par la construction d'aqueducs pouvant s'étendre sur de très grandes distances. Or les aqueducs utilisés pour l'alimentation en eau des villes sont généralement assez anciens et doivent être entretenus régulièrement, la paroi de la galerie étant recouverte, habituellement, d'un enduit qui doit être nettoyé et parfois, remplacé entièrement, afin d'assurer, d'une part, l'écoulement du fluide transporté sans perte de charge excessive et, d'autre part, d'éviter la contamination de ce fluide lorsqu'il s'agit d'eau potable.

De tels aqueducs constituent une galerie tubulaire limitée par une face interne circulaire ou ovoïde, avec, parfois, un fond plat permettant la circulation du personnel pour entretien. Cette galerie doit suivre une faible pente et est donc réalisée, soit au dessus du terrain naturel sur un ouvrage en maçonnerie ou en béton, soit en dessous, en souterrain.

Dans tous les cas, le massif en maçonnerie ou le terrain dans lequel est réalisé la galerie peut être soumis, à la longue, à des tassements différentiels qui provoquent une fissuration du massif et, par conséquent, du revêtement.

Il en résulte des pertes d'eau et un risque de contamination et il est donc nécessaire de surveiller l'état du revêtement et de réparer, en cas de besoin, les parties détériorées.

De telles galeries peuvent aussi être utilisées pour l'évacuation d'eaux usées industrielles ou servir de collecteurs d'égouts et il est nécessaire, également, d'éviter les fuites et de réparer le revêtement en cas de fissuration, pour éviter une pollution de l'environnement.

On a déjà proposé, pour réaliser le revêtement d'une galerie et, en particulier, le réparer en cas de fissuration, de recouvrir la face interne de la galerie d'une peau d'étanchéité constituée d'une feuille mince continue épousant le profil interne la galerie.

Le document FR-A-2 656 821, par exemple, décrit un tel procédé dans lequel la peau d'étanchéité est constituée d'une feuille mince en matière plastique qui est introduite à l'intérieur de la galerie existante et est munie, sur sa face externe, de parties en saillie formant des écarteurs venant prendre appui sur la face interne de la galerie de façon à maintenir entre celle-ci et la peau d'étanchéité un espace annulaire qui est rempli d'un coulis durcissable qui assure la transmission à la paroi de la galerie des poussées internes résultant, par exemple, de la pression du fluide transporté. De ce fait, la peau d'étanchéité qui prend appui, sur toute sa surface, sur le massif extérieur par l'intermédiaire du coulis durcissable, doit résister uniquement à des efforts de traction et peut être constituée d'une feuille mince, par exemple en matière plastique.

Cependant, lorsque le conduit ainsi réalisé est vide ou, du moins, soumis à une faible pression, sa paroi peut être soumise à des poussées externes, en particulier lorsque la galerie est réalisée en souterrain et subit la poussée des terres.

De plus, les raisons qui ont amené la fissuration de la paroi de la galerie, en particulier des tassements différentiels, peuvent se reproduire et, dans ce cas, une simple feuille en matière plastique telle que prévue dans le document FR-A-2 656 821 déjà cité, risque de se déchirer.

Le document FR-A-2 656 821 décrit un procédé de réparation de la face interne d'une galerie selon le préambule de la revendication 1.

L'invention a pour objet de résoudre un tel problème en réalisant un revêtement capable de supporter des efforts externes, en particulier des tassements différentiels, sans risque de fissuration ou de déchirure.

L'invention concerne donc un procédé de réparation, en cas de fissuration, du revêtement de la face interne d'une galerie de circulation de fluide, selon la revendication 1.

Conformément à l'invention, la matière moulable injectée dans l'espace entre la paroi mince et la face interne de la galerie est une mousse d'un produit plastique solidifiable, capable d'adhérer sur la face interne de la galerie et sur la face externe de la paroi mince et les organes d'écartement forment une armature interne noyée dans ladite mousse solidifiable, de façon à assurer une solidarisation souple de la paroi tubulaire avec le massif extérieur permettant de faibles déformations de ladite paroi sous l'effet d'efforts extérieurs, tout en maintenant la continuité du revêtement.

De façon particulièrement avantageuse, l'armature interne est constituée d'une pluralité de bandes plates ayant une partie fixée sur la face interne de la paroi mince et s'étendant vers l'extérieur en prenant appui sur la face interne de la galerie pour le maintien de l'espace entre celle-ci et la paroi mince.

De préférence, l'armature interne comporte une pluralité de bandes plates ondulées, solidarisées chacune par au moins une partie de leur sommet avec la face interne de la paroi mince et prenant appui par les sommets opposés sur la face interne de la galerie.

Dans un mode de réalisation préférentiel, ces bandes plates ondulées forment des étriers s'étendant suivant des plans rayonnants répartis autour de l'axe longitudinal de la galerie et parallèles à celui-ci.

Selon une autre caractéristique avantageuse, l'armature interne comporte une première série de barres transversales enfilées dans les ondulations des étriers et formant des cerces sensiblement parallèles à la face interne de la galerie, placées dans des plans transversaux à l'axe longitudinal de celle-ci.

De préférence, ces barres transversales sont constituées de bandes plates métalliques.

Dans un mode de réalisation préférentiel, chaque panneau est réalisé à plat en fixant d'abord des étriers formés de bandes ondulées parallèles écartées les unes des autres, sur la face supérieure d'un panneau puis en passant dans les ondulations desdits étriers des barres transversales qui sont soudées seulement sur l'un des étriers de façon à permettre l'enroulement du panneau autour de son axe, avec coulissement des barres transversales par rapport aux étriers tournés vers l'extérieur.

D'autres caractéristiques avantageuses apparaîtront dans la description qui va suivre de certains modes de réalisation particuliers donnés à titre d'exemple et représentés sur les dessins annexés.
La figure 1 est une vue schématique, en coupe transversale, d'une galerie munie d'un revêtement selon le procédé de l'invention.
La figure 2 est une vue en coupe transversale d'un panneau de revêtement posé à plat.
La figure 3 est une vue en coupe longitudinale du panneau de revêtement.
La figure 4 est une vue partielle, à échelle agrandie, du revêtement et de son armature.
La figure 5 montre schématiquement, en perspective, le processus d'enroulement d'un panneau de revêtement.
La figure 6 montre, en perspective, un panneau surroulé.
La figure 7 montre le fonctionnement d'un outil de déroulement, en deux étapes successives;
La figure 8 est une vue de détail d'une mâchoire de serrage.
La figure 9 montre un chariot de transport équipé d'un outil de déroulement.
Les figures 10 et 11 illustrent schématiquement la pose d'un nouvel élément de paroi à l'intérieur d'une galerie.
La figure 12 est une vue de détail de l'emboîtement entre deux éléments consécutifs.
La figure 13 montre schématiquement la réalisation d'une jonction étanche entre deux éléments successifs de revêtement.

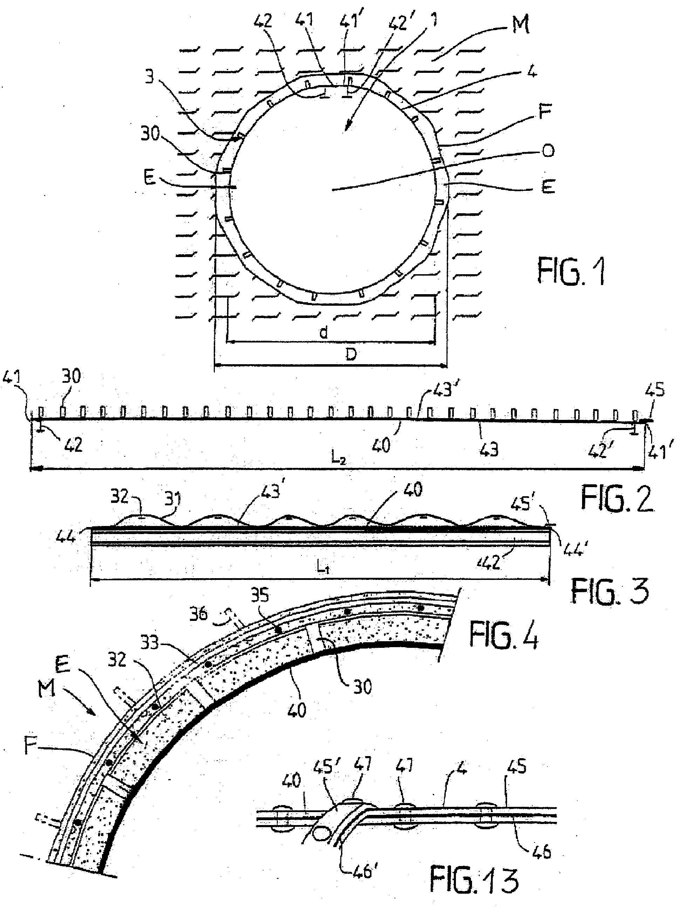

Sur la figure 1, on a représenté schématiquement, en coupe transversale, une galerie G réalisée, pour le transport de l'eau à l'intérieur d'un massif M qui peut être un terrain compact ou rocheux lorsque la galerie est réalisée en tunnel, ou bien un massif en maçonnerie, par exemple en meulière ou en briques. De façon classique, une telle conduite pour le transport d'eau potable présente généralement une section fermée pour éviter les risques de pollution et d'évaporation de l'eau.

La galerie G est donc limitée par une face interne F ayant une section transversale quelconque mais, généralement, circulaire, comme indiqué sur le dessin, ou bien par exemple, ovoïde. Même lorsque le massif de support entourant la galerie est réalisée en maçonnerie, la face interne F est relativement irrégulière et, en outre, plus ou moins perméable. Cette face F doit donc être recouverte d'un enduit ou crépi lisse et étanche afin de permettre l'écoulement de l'eau sans perte de charge et sans fuite, cet enduit devant, en outre, être adapté au transport d'eau potable.

Selon l'invention, cet enduit est remplacé par une paroi mince métallique 4, de préférence en acier inoxydable.

En effet, il est particulièrement avantageux, pour un aqueduc, d'utiliser, pour le revêtement, un tel métal qui est le plus approprié pour le transport de l'eau car il est totalement neutre et résiste parfaitement à la corrosion. En outre, des feuilles en acier inoxydable, même au contact de l'eau, restent brillantes et lisses et permettent donc un écoulement facile avec peu de remous et de perte de charge.

Certes, un tel métal est relativement onéreux mais, fabriqué et livré en grande quantité, son coût reste relativement limité, et il est donc apparu que, compte tenu des très grands avantages apportés par un tel revêtement en acier inoxydable, en particulier, un meilleur écoulement de l'eau et une résistance à la corrosion et aux salissures qui permet de simplifier l'entretien et le nettoyage et d'allonger considérablement la durée de vie du revêtement, l'utilisation d'un acier inoxydable pouvait être, finalement, plus économique qu'un enduit classique en mortier qui doit, lui-même, être recouvert d'un revêtement suffisamment étanche, résistant à l'usure et compatible avec le transport de l'eau. En outre, du fait que la paroi mince constitue à la fois le revêtement de protection et la nappe d'armature, son coût s'impute également en déduction de celui des barres d'armatures qu'elle remplace, ce qui justifie encore l'intérêt économique de l'invention.

Le diamètre (d) de la paroi de revêtement 4 est un peu inférieur au diamètre (D) de la galerie de façon à laisser, entre la paroi 4 et la face interne F de la galerie un espace E dans lequel est coulé ou injecté, après la pose de la paroi 4, un produit de scellement fluide qui remplit tout l'espace E dont l'épaisseur reste, évidemment assez faible, normalement inférieure à 10 cm.

Selon une caractéristique essentielle de l'invention, ce produit de scellement est une mousse d'un produit solidifiable capable, après durcissement, de conserver une certaine souplesse, par exemple une mousse de polyuréthane.

La paroi de revêtement 4 de la galerie est formée d'une série de tronçons successifs constitués chacun d'un panneau de paroi mince de forme sensiblement rectangulaire, enroulé autour d'un axe longitudinal O.

Selon une autre caractéristique de l'invention, cette paroi de revêtement 4 est une tôle métallique mince dont l'épaisseur est donc déterminée, compte tenu de la limite élastique de l'acier utilisé, de façon à résister aux efforts prévisibles, en particulier les poussées externes résultant de tassements différentiels.

En effet, lorsque la conduite est utilisée pour le transport d'un fluide sous pression, la paroi de revêtement, qui prend appui sur la face interne de la galerie par une matière durcissable, est soumise uniquement à des efforts de traction.

En revanche, dans le cas d'un aqueduc pour l'alimentation d'une ville en eau potable, la conduite fonctionne habituellement en écoulement libre et n'est donc pas sous pression. Elle est alors soumise à des poussées externes, par exemple celle d'un remblais lorsqu'elle est posée en tranché ou du terrain et de la nappe phréatique, lorsqu'elle est enterrée. Il en résulte un risque de tassements différentiels pouvant provoquer des fissures et, par conséquent, des fuites d'eau. De tels tassements peuvent, d'ailleurs, se produire également dans le cas d'une conduite ménagée sur un ouvrage en maçonnerie pour le franchissement d'une vallée, de tels ouvrages étant, souvent, très anciens.

A moins de consolider le terrain, avec un résultat incertain, de tels tassements peuvent se reproduire et, par conséquent, provoquer une nouvelle fissuration après la réparation du revêtement.

L'utilisation, selon l'invention, d'une mousse solidifiable comme matière de remplissage entre la paroi mince du revêtement et la face interne de la galerie permet de résoudre avantageusement un tel problème.

En effet, une telle mousse solidifiable, par exemple une mousse de polyuréthane, adhère parfaitement à la face externe 43' de la paroi mince 4 et à la face interne F en maçonnerie de la galerie G.

Elle réalise donc une véritable solidarisation mais en conservant une certaine souplesse.

Par ailleurs, l'épaisseur de la paroi mince tubulaire 4 peut être calculée de façon à permettre de faibles déformations de cette paroi, sous l'effet des tassements différentiels, tout en maintenant la continuité du revêtement.

La solidarisation entre la paroi 4 et la matière solidifiable 10 est, en outre, renforcée par l'armature interne 3 fixé sur la paroi 4 et constituée, de préférence, de bandes métalliques ondulées de la façon représentée sur la figure 3.

Selon une autre caractéristique préférentielle, ces étriers ondulés sont placés dans des plans rayonnants parallèles à l'axe longitudinal O de la conduite et, par conséquent, orthogonaux à la paroi 4, chaque panneau de revêtement pouvant avantageusement être réalisé et posé de la façon représentée sur les dessins.

D'une façon générale, la paroi de revêtement interne 4, réalisée en tôle inox de qualité alimentaire, pourra avoir une épaisseur de l'ordre de 1 à 1, 5 mm. Le revêtement pourra être constitué de plaques minces ayant une largeur correspondant au périmètre de la galerie, par exemple 6m pour une galerie de 2 m de diamètre et une longueur de 4 à 6 m, qui dépend, cependant, du tracé de la galerie, celle-ci pouvant présenter des coudes.

Ces plaques ayant des dimensions supérieures au gabarit de transport, on livrera, normalement, sur le chantier, des bobines ou « coils » d'acier inoxydable, chaque bobine étant déroulée pour découper les plaques constituant les panneaux de revêtement.

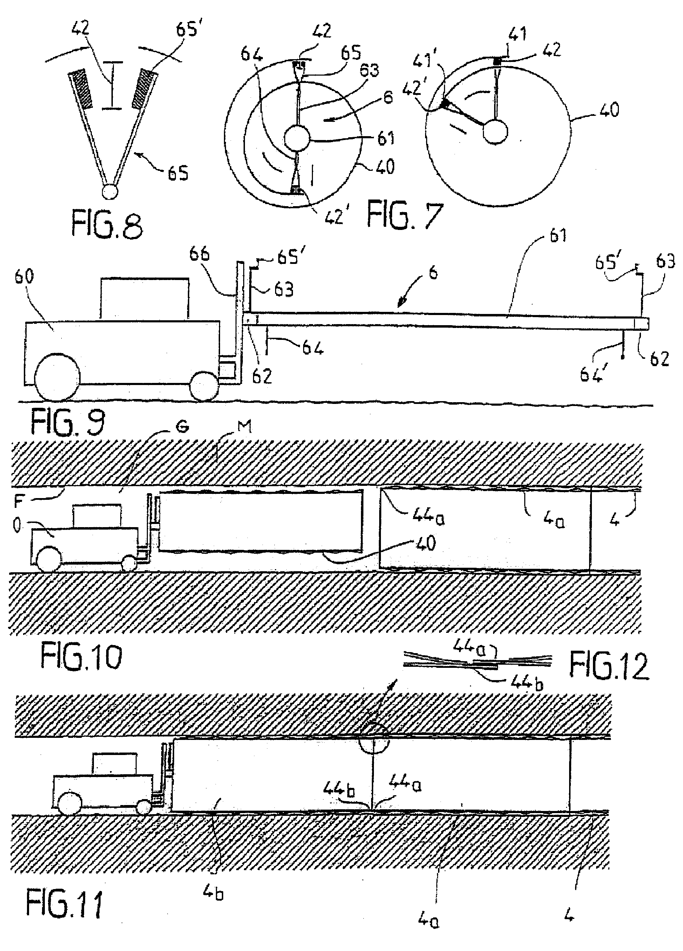

Ces plaques seront préparées à plat comme l'indiquent schématiquement les figures 2 et 3 qui montrent la réalisation d'un panneau, respectivement en coupe transversale sur la figure 7 et en coupe longitudinale sur la figure 3.

La longueur L1 d'un panneau (figure 3) peut être égale à la largeur d'une bande livrée en bobine.

Si cette largeur est insuffisante, il est possible de dérouler plusieurs bobines en lés parallèles soudés bord à bord de façon à constituer des plaques ayant la largeur souhaitée, par exemple 5 mètres environ.

D'autre part, du fait que le panneau est découpé sur une bobine déroulée, sa largeur L2 peut être quelconque. Selon l'une des caractéristiques de l'invention, la largeur L2 du panneau sera sensiblement égale ou, seulement, un peu inférieure à la circonférence, en section transversale, de la face interne F de la galerie de façon que, comme le montre la figure 1, après enroulement du panneau autour de son axe longitudinal O, les deux côtés latéraux 41 et 41' du panneau 4, viennent en contact ou se recouvrent légèrement ou, encore, sont recouverts d'un couvre-joint 45 permettant leur emboîtement.

Il est à noter que, sur la figure 1, on a représenté une galerie G à section circulaire mais le profil, en section transversale, de la galerie, pourra être, par exemple, ovoïde, ou, même comporter un fond plat.

D'une façon générale, chaque panneau enroulé aura une forme cylindrique, le terme cylindrique s'appliquant à toute surface réglée à génératrices parallèles à l'axe longitudinal O.

La plaque 40 formant un panneau est ainsi découpée à partir de la bobine d'acier inoxydable et posée sur deux profilés latéraux 42, 42' parallèles à l'axe longitudinal O et ayant une longueur sensiblement égale à la longueur L1 du panneau.

Comme indiqué plus haut, l'espace E entre le revêtement 4 et la face interne F de la galerie est rempli d'une mousse solidifiable 10 dans laquelle s'étend une armature interne de solidarisation 3 comprenant, de préférence, une pluralité d'étriers longitudinaux 30 écartés les uns des autres et répartis sur toute la largeur L2 du panneau.

Ces étriers pourraient être constitués de tronçons de bande séparés, soudés ou collés, par une extrémité, sur la paroi 50 et s'étendant dans l'espace E entre la paroi métallique 40 et la face interne F de la galerie G. Cependant, de la façon représentée sur la figure 2, les étriers 30 sont, de préférence, constitués chacun d'une bande métallique ondulée qui peut ainsi être soudée, par les sommets des ondulations, sur la face supérieure 43' du panneau 40 qui, après enroulement du panneau, constituera sa face externe tournée vers l'espace annulaire E.

Comme le montrent les figures 2, 3, 4, ces étriers ondulés 30 sont disposés dans des plans parallèles à l'axe longitudinal O de telle sorte que, après enroulement du panneau 40, les étriers soient disposés en étoile, dans des plans radiaux, de la façon indiquée sur la figure 1. L'armature 3 est complétée par des barres transversales 32 qui peuvent être des fers ronds mais sont constituées, de préférence, de bandes plates qui sont enfilées dans les ondulations des étriers 30, au niveau de leurs sommets supérieurs. Chaque barre 32 est fixée seulement sur l'un des étriers de façon à pouvoir coulisser par rapport aux autres étriers lorsque le panneau 40 est enroulé. Ainsi, comme le montre la figure 4, les barres 32 forment des cerces circulaires placées dans des plans transversaux à l'axe longitudinal d'enroulement O du panneau 40.

Par ailleurs, l'armature 3 peut encore être complétée par des barres transversales 33 qui sont cintrées de façon à s'appliquer sur la face interne F de la galerie. Comme le montre la figure 4, les barres 33 peuvent avantageusement être fixées dans le massif de support 10 par des moyens de liaison 36 associés à des écarteurs permettant de régler leur position par rapport à la face interne F de façon à compenser les irrégularités de celle-ci. Chaque barre transversale 33 forme ainsi une sorte de gabarit sur lequel vient prendre appui le panneau 40, lors de son déroulement, par les sommets des étriers ondulés 30.

De préférence, deux bandes métalliques 45, 45' sont fixées sur deux côtés consécutifs perpendiculaires du panneau, par exemple un côté latéral 41' (figure 2) et un côté transversal 44', chaque bande 45, 45' étant fixée sur une moitié de sa largeur de façon à dépasser du panneau pour former un couvre-joint permettant de fixer bord à bord les deux côtés latéraux 41, 41' d'un même panneau ou bien les bords transversaux adjacents de deux tronçons consécutifs.

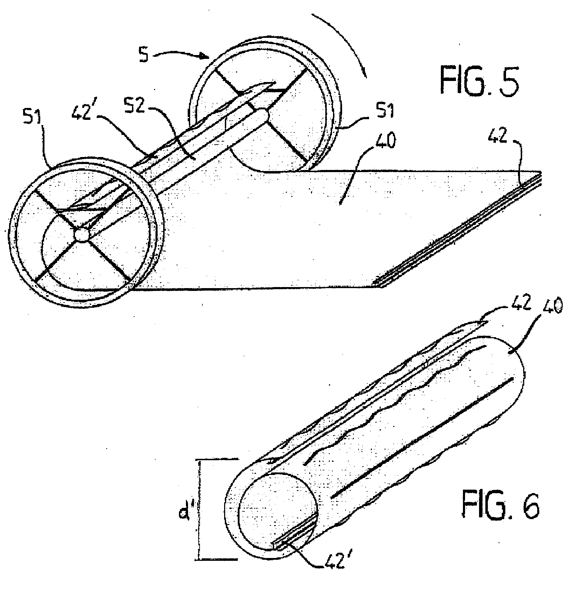

Après la pose des profilés latéraux 42, 42' et des armatures, le panneau 40 ainsi réalisé peut être enroulé de la façon représentée schématiquement sur la figure 5. A cet effet, on utilise un outil d'enroulement 5 comprenant par exemple deux plateaux circulaires 51 tournant autour d'un axe 52 et sur lesquels peuvent être fixés les extrémités de l'un des profilés 42'. Par rotation des plateaux 51 autour de leur axe 52, on enroule ainsi le panneau 40 autour de l'axe 52 de plus d'un tour de façon à former un panneau « surroulé » représenté schématiquement sur la figure 13, dont le diamètre d' est largement inférieur au diamètre D de la galerie.

Ce panneau surroulé peut ainsi être introduit dans la galerie, de la façon qui sera décrite plus loin puis déroulé, afin de réaliser la paroi cylindrique, les deux profilés 42, 42' étant côte à côte et les côtés 41, 41' étant en contact.

Pour la mise en place et le déroulement d'un panneau surroulé, on utilise avantageusement un outil de déroulement du type représenté sur les figures 7, 8, 9.

D'une façon générale, cet outil de déroulement 6 comporte un arbre central 61 monté rotatif autour de son axe sur deux paliers 62 fixes en rotation et portant chacun deux bras écartés 63, 63', l'arbre rotatif 61 portant également un bras 64, 64' à chaque extrémité.

Chaque paire de bras est munie d'un organe de serrage 65 représenté schématiquement sur la figure 8 et comportant deux mâchoires articulées autour d'un axe et munies de parties d'appui 65' conformées de façon à venir se serrer de part et d'autre d'un profilé latéral 42 ou 42'.

Après enroulement du panneau 40 au moyen de l'outil d'enroulement 5, le panneau est maintenu provisoirement dans la position surroulée représentée sur la figure 6, par exemple par une ou deux ceintures extérieures non représentées.

L'outil de déroulement 6 est alors enfilé axialement à l'intérieur du panneau surroulé 40. A cet effet, il est particulièrement avantageux de monter l'outil de déroulement 6 sur un chariot de transport tel qu'un chariot élévateur 60 muni à une extrémité avant d'un cadre orientable sur lequel, habituellement, est monté coulissant verticalement un châssis de levage 66 comportant deux bras formant une fourche. Selon l'invention, il est avantageux d'utiliser, comme moyen de transport, un chariot élévateur 60 de ce type en remplaçant la fourche de levage par l'outil de déroulement 6 dont l'arbre central 61 est fixé sur le châssis de levage coulissant 66 et s'étend en porte à faux vers l'avant.

L'outil de déroulement 6 ainsi porté par le chariot 60 peut être enfilé axialement à l'intérieur du panneau surroulé 40. L'écartement des bras 63, 63' montés sur les paliers 62 et fixes en rotation est un peu supérieur à la longueur L1 d'un panneau de façon que les mâchoires de serrage 65' portées par les deux bras 63, 63' puissent s'engager, respectivement sur les deux extrémités de la poutre latérale 42 placée sur le côté externe du panneau surroulé 40. Pour faciliter l'enfilement du panneau et sa prise en charge, le bras fixe 65' placé à l'extrémité avant de l'arbre rotatif 61 peut, d'ailleurs, être articulé autour d'un axe orthogonal à l'axe horizontal de l'arbre 61.

Les deux bras 64, 64' montés sur l'arbre rotatif 61 sont, en revanche, écartés d'une distance inférieure à la longueur L1 du panneau 40 et leur longueur est réglée de façon que les mâchoires 65 placées à leurs extrémités puissent s'engager sur le profilé 42' disposé à l'intérieur du panneau surroulé. Ce dernier est ainsi pris en charge par l'outil de déroulement de la façon représentée schématiquement sur la partie gauche de la figure 10.

Il est à noter qu'un chariot élévateur peut avoir des dimensions assez réduites et que, en particulier, son encombrement en hauteur dépend de l'amplitude de levage. Or, dans le cas de l'invention, cette amplitude est faible. Par conséquent, l'outil de déroulement 6 peut être monté sur un chariot de dimensions compatibles avec celles de la galerie à revêtir afin d'être introduit à l'intérieur de celle-ci de la façon représentée sur les figures 10 et 11.

Comme on l'a indiqué plus haut, en effet, un aqueduc présente généralement une longueur très importante de plusieurs dizaines de kilomètres et, grâce à l'invention, il est possible de ménager dans le massif de support des orifices de dimensions suffisantes pour introduire dans la galerie un chariot élévateur 60 et/ou un panneau surroulé, le chariot venant prendre appui, par des organes de roulement, sur la partie inférieure de la face interne F de la galerie. L'orifice d'introduction peut donc être ménagé à une assez grande distance du lieu de mise en place du revêtement et le chariot 60 portant l'outil de déroulement 6 et le panneau surroulé, se déplace axialement à l'intérieur de la galerie jusqu'à la position de pose représentée sur la figure 11. Etant donné que le revêtement est constitué de tronçons élémentaires mis bout à bout, le chariot 60 restera, de préférence, à l'intérieur de la galerie, les panneaux surroulés étant introduits l'un après l'autre dans la galerie par l'orifice ménagé dans le plafond de celle-ci.

La figure 10 montre donc schématiquement un aqueduc constitué d'une galerie G ménagée à l'intérieur d'un massif de support M et dans lequel a déjà été réalisé un revêtement 4, par tronçons successifs, jusqu'à un bord transversal 44a ménagé à l'extrémité arrière du dernier tronçon 4a du revêtement 4, dans un plan perpendiculaire à l'axe de la galerie.

Le chariot de transport 60 se trouvant à l'intérieur de la galerie, on introduit dans celle-ci un nouveau panneau surroulé 40 que l'on enfile sur l'outil de déroulement 6 qui le prend en charge. Le chariot est alors avancé jusqu'à la position représentée sur la figure 10 pour laquelle le nouveau panneau 40 est placé sensiblement dans sa position de pose, dans le prolongement du dernier tronçon 4a du revêtement 4 déjà réalisé.

On commande alors la rotation des bras mobiles 64 qui détermine le déroulement du panneau 40 de la façon indiquée sur la partie droite de la figure 12, jusqu'à ce que le profilé interne 42' dépasse la position du profilé externe 22. Comme indiqué plus haut, le profil du panneau déroulé peut être déterminé avec une certaine précision par les barres transversales 33 qui forment un gabarit, ce profil n'étant, d'ailleurs, pas nécessairement circulaire.

On se trouve alors dans la position représentée sur la figure 11 et l'on peut procéder à la jonction étanche des bords en vis à vis du panneau 40 respectivement le long des deux côtés latéraux 41, 41' du nouveau tronçon 4b ainsi posé ainsi que des côtés transversaux adjacents, respectivement 44a à l'extrémité arrière du dernier tronçon de revêtement 4a déjà posé et 44b à l'extrémité avant du nouveau tronçon 4b.

Comme le montre la vue de détail de la figure 12, les deux extrémités 44a, 44b peuvent simplement s'enfiler l'une dans l'autre et être soudées par contact. Pour faciliter l'emboîtement des extrémités adjacentes, il peut être avantageux de donner à chaque panneau au moment de l'enroulement, une forme légèrement tronconique, l'extrémité avant 44b ayant un diamètre un peu inférieur à celui de l'extrémité arrière 44a. Dans ce cas, les côtés latéraux 41, 41' du panneau 40 ne sont pas rigoureusement parallèles, le panneau étant légèrement trapézoïdal.

Dans la mesure où tous les éléments du revêtement sont métalliques, il est possible et avantageux de réaliser des jonctions soudées et, pour cela, non seulement la paroi de chaque panneau 40 du revêtement mais également tous les autres éléments tels que les armatures 3 et les profilés 42, 42', sont réalisés en acier inoxydable, l'utilisation de métaux de même nature facilitant le soudage. En outre, comme l'acier inoxydable présente l'avantage d'une très longue durée et d'un entretien facile, il est préférable de réaliser également en acier inoxydable toutes les armatures de façon à augmenter la longévité du revêtement en évitant les risques de corrosion.

Par ailleurs, il est avantageux de réaliser la jonction des bords en regard des parois de revêtement par des soudures qui assurent non seulement la résistance mais également l'étanchéité et permettent de résister à des pressions internes ou externes de l'ordre de 3 bars. Toutefois, les jonctions peuvent également être collées, rivetées ou boulonnées, par exemple de la façon représentée sur la figure 20.

En effet, comme on l'a déjà exposé en se référant à la figure 3, la jonction entre les bords latéraux d'un panneau peut être assurée au moyen d'un couvre-joint 45 associé à un joint d'étanchéité. Une disposition analogue utilisant un couvre-joint circulaire 45' et un joint 46' peut être utilisée pour réaliser la jonction entre les extrémités adjacentes 44a, 44b du tronçon déjà posé 4a et du nouveau tronçon 4b.

De préférence, au moins les bras rotatifs 64 de l'outil de déroulement 6 ont une longueur variable, par exemple au moyen d'un montage télescopique actionné par un vérin et peuvent donc appliquer le nouvel élément contre la face F de la galerie G au fur et à mesure de son déroulement. De même, du fait que les extrémités, respectivement arrière 44a et avant 44b, des deux tronçons consécutifs sont emboîtées l'une dans l'autre, il est possible, au fur et à mesure que le nouveau tronçon 4b se plaque circulairement sur le tronçon précédent 4b, de perforer des trous dans le tronçon 4a déjà posé en passant à travers l'extrémité 44b du tronçon 4b à poser et en traversant le joint collé 46'. Au fur et à mesure du déroulement, des rivets inox sont posés afin de plaquer le nouveau tronçon 4b et son joint collé contre le tronçon précédent 4. Ce perçage et ce serrage progressif permettent à la tôle inox du tronçon à poser 4b de se mettre en place en s'adaptant à la compression du joint par les rivets. Lorsque tous les rivets de la jonction circulaire du nouveau tronçon 4b sur le tronçon précédent 4a ont été mis en place, l'écartement des deux profilés en clé de voûte du nouveau tronçon est vérifié, et, au besoin corrigé.

La jonction de l'étanchéité entre le joint circulaire et le joint longitudinal peut être réalisée de façon classique.

Lorsque l'aqueduc est en écoulement libre, il est possible de laisser en place les profilés latéraux 42, 42' qui ont servi à l'enroulement et au déroulement et peuvent être placés à la partie supérieure de la conduite. Cependant, il est souvent nécessaire de donner à la conduite une face interne entièrement lisse, en particulier, en cas d'écoulement sous pression. Dans ce cas, il faut retirer les profilés latéraux 42, 42' et il est donc préférable que ceux-ci soient fixés par des boulons.

Par ailleurs, la galerie n'est pas toujours rectiligne et il est parfois nécessaire de ménager des coudes. A cet effet, la jonction entre deux conduites ayant des axes décalés angulairement pourra être effectuée au moyen d'un coude réalisé en usine selon la technique dite des « tranches de melon » utilisée, par exemple, pour la réalisation d'oléoducs. Les éléments seront assemblés et rivetés entre eux sur le site de la façon indiquée plus haut.

Le produit de scellement 10 remplissant l'espace E entre le revêtement 2 et la face interne 11 de la galerie peut être injecté après la pose de plusieurs tronçons consécutifs. A cet effet, des trous d'injection sont percés en usine à une extrémité basse de chaque tronçon et des trous d'évent sont ménagés à l'extrémité haute opposée. Le matériau injecté peut être par exemple un coulis de micro-béton à 400 kg très plastique. Après ouverture de tous les trous d'injection et des évents, ce coulis de béton est injecté par l'extrémité basse et l'injection est poursuivie jusqu'à apparition du coulis par le trou d'évent haut qui est alors fermé ainsi que les points d'injection bas.

Il est à noter que l'utilisation, selon l'invention, de bandes plates ondulées 30 pour constituer l'armature interne est particulièrement avantageuse dans le cas où le produit de scellement est une mousse expansible. En effet, ces bandes plates ondulées prennent appui par une face large dans le produit de scellement et assurent une solidarisation de la paroi de revêtement 2 avec la paroi interne F de la galerie même si ce produit est une mousse d'un produit synthétique sans résistance importante au cisaillement.

La paroi tubulaire 2 ainsi scellée sur la paroi fissurée par une simple mousse de plastique expansé, peut donc être calculée de façon à former, après réparation, une conduite relativement souple capable de s'adapter à des légers déplacements résultant de tassements différentiels.

D'autre part, dans le cas de conduites de grand diamètre, l'utilisation, comme matière de remplissage, d'une mousse plastique particulièrement légère, permettrait d'éviter le risque de fléchissement vers l'intérieur de la paroi de revêtement lors du remplissage de l'espace entre celle-ci et la face interne de la galerie.

La technique qui vient d'être décrite permet de renouveler de façon rapide et économique le revêtement d'un aqueduc existant mais pourrait aussi être utilisée avantageusement pour la construction d'un nouvel aqueduc. Dans ce cas, le revêtement pourrait être réalisé peu de temps après la construction de la galerie, le chariot de transport 60 étant alors introduit simplement par l'extrémité ouverte de celle-ci.

Comme indiqué plus haut, les panneaux 40 munis de leurs profilés 42 et des armatures 31, 32 peuvent être réalisés à plat, à partir d'une bobine d'acier inoxydable.

Les panneaux ainsi réalisés peuvent aussi être transportés à plat avant surroulage. Dans ce cas, leurs dimensions doivent respecter le gabarit routier.

Pour éviter de poser un trop grand nombre d'éléments, il est possible, comme on l'a indiqué plus haut, de réaliser des panneaux formés de plusieurs lés adjacents afin de réaliser des éléments ayant une longueur, par exemple, de 5 mètres environ, les panneaux étant alors transportés dans leurs positions surroulées représentées sur la figure 13. Par exemple, un semi-remorque pourrait ainsi transporter 8 panneaux surroulés de 5 mètres de long.

Un tel panneau surroulé peut avoir un poids unitaire de 400 à 500 kg environ, ce qui correspond à la capacité de levage d'un petit chariot élévateur de type classique.

Bien entendu, l'invention ne se limite pas aux détails des modes de réalisation décrits précédemment à titre de simples exemples mais couvre au contraire, des variantes utilisant, par exemple, des moyens équivalents, ou bien d'autres applications de cette technique, sans sortir du cadre défini par les revendications.

Par exemple, une mousse solidifiable en particulier de polyuréthane présente l'avantage d'une excellente adhérence, à la fois sur une paroi métallique et sur une paroi rocheuse ou maçonne. En outre, une telle mousse est expansible et pénètre donc dans les fissures pour colmater celles-ci, consolider la maçonnerie et assurer l'étanchéité vis-à-vis de l'extérieur.

## Revendications

1. Procédé de réparation, en cas de fissuration, du revêtement de la face interne d'une galerie de circulation de fluide ménagée dans un massif (M), procédé dans lequel on introduit à l'intérieur de la galerie (G) une feuille mince formant peau d'étanchéité et munie, sur sa face externe, d'une pluralité d'organes d'écartement prenant appui sur la face interne (F) de la galerie (G) pour le maintien, entre celle-ci et la peau d'étanchéité, d'un espace annulaire qui est rempli d'un coulis durcissable, **caractérisé par le fait que** la peau d'étanchéité est une paroi mince métallique (4), que le coulis durcissable (10) est une mousse d'un produit plastique solidifiable, capable d'adhérer sur la face interne (F) de la galerie et sur la face externe (43') de la paroi mince (4) et que les organes d'écartement forment une armature interne (3) noyée dans ladite mousse solidifiable (10), de façon à assurer une solidarisation souple de la paroi tubulaire avec le massif extérieur (M) permettant de faibles déformations de ladite paroi (4) sous l'effet d'efforts extérieurs, tout en maintenant la continuité du revêtement.

2. Procédé de réparation d'un revêtement selon la revendication 1, **caractérisé par le fait que** l'armature interne (3) est constituée d'une pluralité de bandes plates (30) ayant une partie fixée sur la face interne (43') de la paroi mince (4) et s'étendant vers l'extérieur en prenant appui sur la face interne (F) de la galerie (G) pour le maintien de l'espace entre celle-ci et la paroi mince (4).

3. Procédé selon la revendication 2, **caractérisé par le fait que** l'armature interne (3) comporte une pluralité de bandes plates ondulées, solidarisées chacune par au moins une partie de leurs sommets avec la face interne (43') de la paroi mince (4) et prenant appui par les sommets opposés sur la face interne (F) de la galerie (G).

4. Procédé selon la revendication 3, **caractérisé par le fait que** les bandes plates ondulées (30) forment des étriers s'étendant suivant des plans rayonnants (P) répartis autour de l'axe longitudinal (O) de la galerie (G) et parallèles à celui-ci.

5. Procédé selon l'une des revendications 3 et 4, **caractérisé par** le fait l'armature interne (3) comporte une première série de barres transversales (32) enfilées dans les ondulations des étriers (30) et formant des cerces sensiblement parallèles à la face interne (F) de la galerie, placées dans des plans transversaux à l'axe longitudinal de celle-ci.

6. Procédé selon la revendication 5, **caractérisé par le fait que** les barres transversales (32) sont constituées de bandes plates métalliques.

7. Procédé selon l'une des revendications précédentes, **caractérisé par le fait que** chaque panneau (40) est réalisé à plat en fixant d'abord des étriers formés de bandes ondulées parallèles (30) écartées les unes des autres, sur la face supérieure (43' d'un panneau (40) puis en passant dans les ondulations desdits étriers (30) des barres transversales (32) qui sont soudées seulement sur l'un des étriers de façon à permettre l'enroulement du panneau (40) autour de son axe, avec coulissement des barres transversales (32) par rapport aux étriers (30) tournés vers l'extérieur.

8. Procédé selon l'une des revendications précédentes de réparation du revêtement d'une galerie (G), **caractérisé par le fait que** la paroi mince (4) formant la peau d'étanchéité est constituée de tronçons successifs (4a, 4b) comportant chacun un panneau (40) de paroi mince rectangulaire ayant une longueur correspondant à la longueur du tronçon et une largeur correspondant au périmètre de la conduite en section transversale, que ce panneau (40) est d'abord posé à plat pour placer sur une face supérieure (43') une armature interne (3) comportant au moins une pluralité de bandes ondulées (30) parallèles à un axe longitudinal du panneau et écartées l'une de l'autre, lesdites bandes (30) étant soudées sur la face supérieure (43') du panneau (40) par au moins certains des sommets des ondulations, que le panneau (40) est ensuite surroulé pour former un tube de diamètre global inférieur à celui de la galerie (G), les bandes ondulées (30) étant tournées vers l'extérieur, que le panneau surroulé (40) est introduit dans la galerie (G) jusqu'à l'emplacement de pose et est déroulé de façon à prendre appui sur la face latérale (F) de la galerie (G) par les sommets des bandes ondulées (30) ledit panneau (40) étant relié de façon étanche et résistante, d'une part le long de deux côtés longitudinaux (41, 41') venus en contact et d'autre part, le long d'un côté transversal extrême (44b), avec le côté extrême correspondant (44a) du dernier tronçon (4a) déjà posé.

9. Procédé de réparation du revêtement d'une galerie selon la revendication 8, **caractérisé par le fait que** le panneau (40) est surroulé au moyen d'un outil d'enroulement (5) comprenant deux plateaux circulaires (51) tournant autour d'un axe (52), sur lesquels sont fixées les extrémités d'un profilé (42) ménagé sur l'un des cotés longitudinaux du panneau (40) qui est enroulé sur plus d'un tour par rotation des plateaux 51 autour de leur axe (52).

10. Procédé selon la revendication 9, **caractérisé en ce que** le panneau surroulé (40) est introduit dans la galerie au moyen d'un outil de déroulement (6) comportant un arbre central (61) portant, à ses extrémités, deux bras mobiles (64, 64') et monté rotatif sur deux paliers fixes en rotation, portant respectivement deux bras écartés (63, 63') dont l'écartement est un peu supérieur à la longueur d'un panneau (40), chaque paire de bras (63, 63') (64, 64') étant munie d'un organe de serrage (65), et que l'outil de déroulement (6) est enfilé dans le panneau surroulé (40) de façon que les organes de serrage (65) portés respectivement par les bras (63, 63') des paliers (62, 62') s'engagent sur les extrémités d'un profilé latéral (42) placé sur le coté externe du panneau surroulé (40) alors que les organes de serrage (65) des bras (64, 64') de l'arbre central (61) s'engagent sur les extrémités d'un profilé (42') placé sur le coté interne du panneau surroulé (40), que ledit panneau (40) est alors placé dans sa position de pose par avancement de l'outil (6) à l'intérieur de la galerie (G) puis est déroulé par rotation des bras mobiles (64, 64') jusqu'à ce que le profilé interne (42') dépasse la position du profilé externe (42), et l'on procède alors à la jonction étanche des bords en vis-à-vis du panneau (40) le long des cotés latéraux (41, 41'), ainsi que des cotés transversaux adjacents, respectivement (44a) du dernier tronçon déjà posé (4a) et (44b) du nouveau tronçon (4b).

11. Procédé selon la revendication 10, **caractérisé par le fait que** l'outil de déroulement (6) est monté sur un chariot de transport (60) tel qu'un chariot élévateur, de dimensions compatibles avec celles de la galerie à revêtir, afin d'être introduit à l'intérieur de celle-ci.

## Patentansprüche

1. Verfahren zum Reparieren, im Falle von Rissen, der Verkleidung der Innenseite einer Flüssigkeit führenden, in einem Massiv (M) angelegten Galerie, Verfahren, bei dem man ins Innere der Galerie (G) ein dünnes, eine Dichthaut bildendes und zum Erhalten eines ringförmigen Raums, der mit einem aushärtenden Schlamm gefüllt ist, auf dessen äußerer Seite mit einer Mehrzahl von sich auf der Innenseite (F) der Galerie (G) abstützenden Abstandselementen versehenes Blatt einführt, **dadurch gekennzeichnet, daß** die Dichthaut eine dünne metallische Wandung ist, daß der aushärtende Schlamm (10) ein Schaum eines verfestigbaren Kunststoffprodukts ist, das geeignet ist, auf der Innenseite (F) der Galerie und auf der Außenseite (43') der dünnen Wandung (4) zu haften, und daß die Abstandselemente eine im verfestigbaren Schaum (10) eingebettete innere Armatur (3) bilden, um eine nachgiebige Verbindung der rohrförmigen Wandung mit dem äußeren Massiv (M) sicherzustellen, die geringförmige Verformungen der besagten Wandung (4) unter äußeren Einflüssen unter gleichzeitiger Bewahrung der durchgehenden Verkleidung ermöglicht.

2. Verfahren zum Reparieren einer Verkleidung gemäß Anspruch 1, **dadurch gekennzeichnet, daß** die innere Armatur (3) aus einer Mehrzahl von flachen Bändern (30) gebildet ist, die einen auf der Innenseite (43') der dünnen Wandung (4) befestigten Teil aufweisen und sich nach außen hin unter Abstützung auf der Innenseite (F) der Galerie (G) zum Erhalten des Raums zwischen dieser und der dünnen Wandung (4) erstrecken.

3. Verfahren gemäß Anspruch 2, **dadurch gekennzeichnet, daß** die innere Armatur (3) eine Mehrzahl von gewellten flachen Bändern aufweist, von denen jedes durch wenigstens einen Teil von deren Spitzen mit der Innenseite (43') der dünnen Wandung (4) fest verbunden ist und die sich mit den entgegengesetzten Spitzen auf der Innenseite (F) der Galerie (G) abstützen.

4. Verfahren gemäß Anspruch 3, **dadurch gekennzeichnet, daß** die gewellten flachen Bänder (30) Montagebügel bilden, die sich entlang von radialen Ebenen (P) erstrecken, die um die Längsachse (O) der Galerie (G) herum verteilt und zu dieser parallel sind.

5. Verfahren gemäß einem der Ansprüche 3 und 4, **dadurch gekennzeichnet, daß** die innere Armatur (3) eine erste Serie von in die Wellungen der Montagebügel eingebrachten und im Wesentlichen zur Innenseite (F) der Galerie parallele Kreise bildenden Querstäben (32) aufweist, die in zur Längsachse derselben querverlaufenden Ebenen angeordnet sind.

6. Verfahren gemäß Anspruch 5, **dadurch gekennzeichnet, daß** die Querstäbe (32) aus flachen metallischen Bändern gebildet sind.

7. Verfahren gemäß einem der vorangehenden Ansprüche, **dadurch gekennzeichnet, daß** jede Platte (40) flach hergestellt wird, indem zunächst die durch die parallelen flachen Bänder (30) gebildeten voneinander beabstandeten Montagebügel auf der Oberseite (43') einer Platte (40) befestigt werden und dann die Querstäbe (32) in die Wellungen der Montagebügel (30) eingezogen werden, die nur an einem der Montagebügel angeschweißt werden, um ein Aufrollen der Platte (40) um deren Achse mit einem Gleiten der Querstäbe (32) gegenüber den nach außen gerichteten Montagebügeln (30) zu ermöglichen.

8. Verfahren gemäß einem der vorangehenden Ansprüche zum Reparieren der Verkleidung einer Galerie (G), **dadurch gekennzeichnet, daß** die die Dichthaut bildende dünne Wandung (4) aus aufeinander folgenden Abschnitten (4a, 4b) besteht, von denen jeder eine rechteckige Platte (40) aus einer dünnen Wandung mit einer der Länge des Abschnitts entsprechenden Länge und einer dem Umfang des Rohrs im Querschnitt entsprechenden Breite aufweist, daß die Platte (40) zunächst flach aufgelegt wird, um auf eine Oberseite (43') eine innere Armatur (3) zu legen, die wenigstens eine Mehrzahl von zu einer Längsachse der Platte parallelen und voneinander beabstandeten gewellten Bändern (30) aufweist, wobei die Bänder (30) auf die Oberseite (43') der Platte (40) mit wenigstens einigen der Spitzen der Wellungen festgeschweißt sind, daß die Platte (40) anschließend aufgerollt wird, um ein Rohr mit einem insgesamt geringerem Durchmesser als dem der Galerie (G) zu bilden, wobei die gewellten Bänder (30) nach außen gerichtet sind, daß die aufgerollte Platte (40) bis zum Einbauort in die Galerie (G) eingebracht wird und dann ausgerollt wird, um durch die gewellten Bänder (30) auf der seitlichen Seite (F) der Galerie (G) in Auflage zu kommen, wobei die Platte (40) in dichter und widerstandkräftiger Weise einerseits entlang zweier in Kontakt gekommener Längsseiten (41, 41') und andererseits entlang einer Querendseite (44b) mit der entsprechenden Seite (44a) eines Endes des letzten bereits gelegten Abschnitts verbunden ist.

9. Verfahren zum Reparieren der Verkleidung einer Galerie gemäß Anspruch 8, **dadurch gekennzeichnet, daß** die Platte (40) mittels eines Aufrollwerkzeugs (5) aufgerollt wird, das zwei sich um eine Achse (52) drehende kreisförmige Platten (51) aufweist, auf denen die Enden eines an einer der Längsseiten der Platte (40) eingerichteten Profils (42), das um mehr als eine Umdrehung durch Drehen der Platten (51) um deren Achse (52) aufgerollt ist, befestigt sind.

10. Verfahren gemäß Anspruch 9, **dadurch gekennzeichnet, daß** die aufgerollte Platte (40) mittels eines Abrollwerkzeugs (6) in die Galerie (G) eingebracht wird, das eine zentrale Achse (61) aufweist, die an deren Enden zwei mobile Arme (64, 64') aufweist, und auf zwei drehfesten Lagern drehbar montiert wird, die jeweils zwei beabstandete Arme (63, 63') aufweisen, deren Abstand etwas größer als die Länge einer Platte (40) ist, wobei jedes Paar Arme (63, 63') (64, 64') mit einem Klemmorgan (65) versehen ist, und daß das Abrollwerkzeug (6) in die aufgerollte Platte (40) derart eingebracht wird, daß die von den Armen (63, 63') der Lager (62, 62') getragenen Klemmorgane (65) an den Enden eines auf der äußeren Seite der aufgerollten Platte (40) angeordneten seitlichen Profils (42) angreifen, während die Klemmorgane (65) der Arme (64, 64') der zentralen Achse (61) an den Enden eines auf der inneren Seite der aufgerollten Platte (40) angeordneten seitlichen Profils (42') angreifen, daß die Platte (40) dann durch Voranbewegen des Werkzeugs (6) in deren Einbauposition ins Innere der Galerie (G) eingebracht wird und dann durch Drehen der beweglichen Arme (64, 64') ausgerollt wird, bis das innere Profil (42') die Position des äußeren Profils (42) überschreitet, und man dann die dichte Verbindung der gegenüberliegenden Ränder der Platte (40) entlang der seitlichen Seiten (41, 41') sowie der anliegenden Querseiten (44a) des letzten bereits gelegten Abschnitts (4a) und (44b) des neuen Abschnitts (4b) herstellt.

11. Verfahren gemäß Anspruch 10, **dadurch gekennzeichnet, daß** das Abrollwerkzeug (6) auf einem Transportwagen, wie zum Beispiel einem Hubwagen, mit Abmessungen, die an jene der auszukleidenden Galerie angepaßt sind, angebracht ist, um ins Innere derselben eingebracht zu werden.

## Claims

1. A method for repairing, in case of cracking, the lining of the internal face of a fluid circulation gallery formed in a massif (M), method in which it is introduced in the gallery (G) a thin film forming a sealing skin and provided, on its external face, with a plurality spacing members bearing to the internal face (F) of the gallery (G) for maintaining, between the latter and the sealing skin, an annular space that is filled with a hardenable grout, **characterized in that** the sealing skin is a thin metal wall (4), **in that** the hardenable grout (10) is a foam of solidifiable plastic product, able to adhere to the internal face (F) of the gallery and to the external face (43') of the thin wall (4) and **in that** the spacing members form an internal armouring (3) buried in said solidifiable foam (10), so as to ensure a flexible securing of the tubular wall to the external massif (M) allowing low deformations of said wall (4) under the effect of external stresses, while maintaining the continuity of the lining.

2. The method for repairing a lining according to claim 1, **characterized in that** the internal armouring (3) is constituted of a plurality of flat bands (30) having a part fastened to the internal face (43') of the thin wall (4) and extending towards the outside by bearing on the internal face (F) of the gallery (G) for maintaining the space between the latter and the thin wall (4).

3. The method according to claim 2, **characterized in that** the internal armouring (3) includes a plurality of corrugated flat bands, each secured through at least a part of their apexes to the internal face (43') of the thin wall (4) and bearing through the opposite apexes on the internal face (F) of the gallery (G).

4. The method according to claim 3, **characterized in that** the corrugated flat bands (30) form stirrups extending in radiating planes (P) distributed around the longitudinal axis (O) of the gallery (G) and parallel to the latter.

5. The method according to one of claims 3 and 4, **characterized in that** the internal armouring (3) includes a first series of transverse bars (32) slipped into the corrugations of the stirrups (30) and forming circular reinforcements substantially parallel to the internal face (F) of the gallery, placed in planes transverse to the longitudinal axis of the latter.

6. The method according to claim 5, **characterized in that** the transverse bars (32) are constituted of metal flat bands.

7. The method according to one the preceding claims, **characterized in that** each panel (40) is made flat by firstly fastening stirrups formed of parallel corrugated bands (30) spaced apart from each other, to the upper face (43') of a panel (40) then by passing into the corrugations of said stirrups (30) of the transverse bars (32) that are welded only to one of the stirrups so as to allow the rolling of the panel (40) about its axis, with sliding of the transverse bars (32) with respect to the stirrups (30) turned towards the outside.

8. The method according to one the preceding claims for repairing the lining of a gallery (G), **characterized in that** the thin wall (4) forming the sealing skin is constituted of successive sections (4a, 4b) each including a rectangular thin wall panel (40) having a length corresponding to the length of the section and a width corresponding to the cross-section perimeter of the duct, **in that** this panel (40) is first put flat to place on an upper face (43') an internal armouring (3) including at least a plurality of corrugated bands (30) parallel to a longitudinal axis of the panel and spaced apart from each other, said bands (30) being welded to the upper face (43') of the panel (40) through at least some of the corrugation apexes, **in that** the panel (40) is then over-rolled to form a tube of general diameter lower than that of the gallery (G), the corrugated bands (30) being turned towards the outside, **in that** the over-rolled panel (40) is introduced into the gallery (G) up to the position of installation and is unrolled so as to bear on the lateral face (F) of the gallery (G) through the apexes of the corrugated bands (30), said panel (40) being sealingly and solidly connected, on the one hand, along two longitudinal sides (41, 41') came to contact, and on the other hand, along an extreme transverse side (44b), with the corresponding extreme side (44a) of the already-placed last section (4a).

9. The method for repairing the lining of a gallery according to claim 8, **characterized in that** the panel (40) is over-rolled by means of a rolling tool (5) comprising two circular plates (51) rotating about an axis (52), to which are fastened the ends of a profile (42) formed on one of the longitudinal sides of the panel (40) that is rolled over more than one turn by rotation of the plates 51 about their axis (52).

10. The method according to claim 9, **characterized in that** the over-rolled panel (40) is introduced into the gallery by means of an unrolling tool (6) including a central shaft (61) carrying, at its ends, two mobile arms (64, 64') and rotationally mounted on two bearings fixed in rotation, respectively bearing two spaced-apart arms (63, 63') whose spacing is a little higher than the length of a panel (40), each pair of arms (63, 63') (64, 64') being provided with a clamping member (65), and **in that** the unrolling tool (6) is slipped into the over-rolled panel (40) in such a manner that the clamping members (65) respectively carried by the arms (63, 63') of the bearings (62, 62') engage the ends of a lateral profile (42) placed on the external side of the over-rolled panel (40) whereas the clamping members (65) of the arms (64, 64') of the central shaft (61) engage the ends of a profile (42') placed on the internal side of the over-rolled panel (40), **in that** said panel (40) is then placed in its position of installation by progression of the tool (6) through the gallery (G), and there after unrolled by rotation of the mobile arms (64, 64) until the internal profile (42') goes beyond the position of the external profile (42), and it is then proceeded to the sealed junction of the opposite edges of the panel (40) along the lateral sides (41, 41'), as well as the adjacent transverse sides, respectively (44a) of the already-placed last section (4a) and (44b) of the new section (4b).

11. The method according to claim 10, **characterized in that** the unrolling tool (6) is mounted on a transport truck (60) such as a lift truck, having a size compatible with that of the gallery to be lined, in order to be introduced inside the latter.
